# FASCICULE DE BREVET EUROPEEN

(11) **EP 0 998 519 B1**
(45) Date de publication et mention de la délivrance du brevet: **22.09.2004**
(21) Numéro de dépôt: 98936477.3
(22) Date de dépôt: 08.07.1998
(51) Int. Cl.: C08G 77/06

(54) **PROCEDE DE PREPARATION DE POLYORGANOSILOXANES PAR HYDROLYSE D'ORGANOHALOSILANES**
VERFAHREN ZUR HERSTELLUNG VON POLYORGANOSILOXANEN DURCH HYDROLYSE VON ORGANOSILANEN
METHOD FOR PREPARING POLYORGANOSILOXANES BY HYDROLYSING ORGANOHALOSILANES

(30) Priorité: 24.07.1997 FR 9709673
(43) Date de publication de la demande: 10.05.2000
(73) Titulaire: RHODIA CHIMIE, 92408 Courbevoie Cédex (FR)
(72) Inventeur: BERRIER, Roger, F-38550 Péage de Roussillon (FR); DOGUET, Loic, F-38550 Péage de Roussillon (FR)
(74) Mandataire: Trolliet, Maurice
(86) Numéro de dépôt international: PCT/FR1998/001470
(87) Numéro de publication internationale: WO 1999/005202

(56) Documents cités:
- EP-A- 0 515 082
- EP-A- 0 524 526
- EP-A- 0 658 588
- FR-A- 2 743 812
- US-A- 5 783 718

## Description

La présente invention relève d'un principe élémentaire de la chimie des silicones, à savoir l'hydrolyse d'halosilanes et plus particulièrement d'organohalosilanes pour obtenir des poly(organo)siloxanes. Cette synthèse est fondée sur la très grande réactivité à l'eau des liaisons ≡ Si-Cl et, dans une moindre mesure, des liaisons ≡ SiOR (R = alkyle).

Les organohalosilanes sont donc transformés par hydrolyse et polycondensation (homo et hétéro condensation) en polyorganosiloxanes intermédiaires (oligoorgano-siloxanes) de structure linéaire ou cyclique, eux-mêmes polymérisables et réticulables en huiles silicones ou en élastomères silicones de plus haut poids moléculaire.

Le diméthyldichlorosilane est un organohalosilane bien connu comme produit de départ de cette réaction d'hydrolyse/condensation.

Les procédés techniques faisant intervenir ladite réaction d'hydrolyse/condensation de Me₂SiCl₂ fonctionnent en continu et sont parfaitement rodés sur le plan industriel. Cela est décrit, par exemple, par H.K. Lichtenwalner et M.M. Sprung, dans Encyclopedia of Polymer science Vol. 12 Wiley and Sons, New-York, 1970.

L'hydrolyse de Me₂SiCl₂ conduit à un mélange complexe d'oligoorganosiloxanes cycliques et linéaires. Classiquement, la source d'eau réactionnelle nécessaire à l'hydrolyse, est formée par une solution d'acide chlorhydrique. Pour rentabiliser au mieux ce procédé, l'acide chlorhydrique formé par hydrolyse est récupéré et peut être ainsi valorisé, par exemple, en étant mis en réaction avec du méthanol pour former du chlorométhane, qui est un produit de base dans la synthèse de diméthyldichlorosilane, selon le procédé de synthèse directe.

Diverses propositions d'hydrolyse d'organohalosilanes, e.g. Me₂SiCl₂, trouvent leur place dans l'art antérieur.

On connaît ainsi par la demande de brevet français N° 2 512 028, un procédé d'hydrolyse d'organohalosilanes, en particulier de Me₂SiCl₂, dans lequel la source d'eau pour l'hydrolyse de l'organohalosilane, est une solution aqueuse d'acide chlorhydrique ayant au moins 35 % en poids de chlorure d'hydrogène, ladite solution étant mise en oeuvre en quantité telle que le rapport molaire *H*_{*2*}*O*/*organochlorosilane* varie entre 10 et 30. L'hydrolyse se déroule en une seule étape. Les buts ici visés sont, d'une part, une réduction significative du pourcentage pondéral d'halogène (de chlorure) dans l'hydrolysat à base de polyorganosiloxane obtenu, et, d'autre part, l'obtention de meilleurs rendements en cyclopolyorganosiloxanes. Pour des températures réactionnelles comprises entre 20 et 30° C, la concentration de la solution aqueuse d'HCl est inférieure ou égale à 37 % en poids. En tout état de cause, quelle que soit la température, cette solution d'HCl n'est jamais saturée dans les exemples de cette demande de brevet N°2 512 028.

L'inconvénient d'une telle hydrolyse en présence d'un excès d'eau conduit à d'importantes quantités d'acide chlorhydrique aqueux. Or, étant donné que l'HCl le plus facilement valorisable est l'HCl gazeux, il est nécessaire de mettre en oeuvre une distillation de l'HCl aqueux, laquelle est particulièrement dispendieuse.

En outre, l'hydrolyse en présence d'un excès d'eau est extrêmement exothermique, ce qui entraîne inévitablement des difficultés opératoires.

L'invention couverte par la demande de brevet français N° 2 518 099, a pour vain objectif de pallier ces inconvénients, en mettant en oeuvre une quantité pratiquement stoechiométrique d'eau, pour l'hydrolyse en une étape du diméthyldichlorosilane. Cela, permet d'obtenir de l'acide chlorhydrique anhydre (gazeux), une solution aqueuse saturée d'acide chlorhydrique et un hydrolysat de polyorganosiloxane. Si l'HCl aqueux de fin d'hydrolyse est saturé, il ressort des exemples que ce n'est nullement le cas pour la solution d'HCl initiale, Cf exemple 3 : 37 % en poids à 60° C. On peut donc en conclure que l'HCl produit à la réaction, n'est pas dégagé en totalité sous forme gazeuse.

L'invention selon le FR-A-2 518 099 vise à éviter les excès d'eau, sans toutefois se placer dans des conditions de déficit en eau, qui sont connues pour donner lieu à des polyorganosiloxanes linéaires, imparfaitement hydrolysés et comprenant des halogènes (chlores) en positions terminales. Ceci est tout à fait pénalisant puisqu'on doit alors finir l'hydrolyse en utilisant de grandes quantités d'eau, ce qui conduit à des effluents d'HCl aqueux particulièrement encombrants et embarrassants, dans la mesure où il est difficile de les recycler et/ou de les retraiter à un moindre coût.

Il n'est pas possible de faire cette hydrolyse complémentaire avec de faibles quantités d'eau, car dans de telles conditions une polycondensation des oligoorganosiloxanes intervient, ce qui a pour conséquence directe une augmentation rédhibitoire de la viscosité.

Plus récemment, le brevet US N° 5 169 970 divulgue un procédé d'hydrolyse d'organochlorosilanes, selon lequel l'hydrolyse s'effectue en deux temps :
- la première étape d'hydrolyse consiste à hydrolyser l'organochlorosilane en mettant en oeuvre une quantité sensiblement stoechiométrique d'eau et produire ainsi un hydrolysat fait de polyorganosiloxanes,
- dans la deuxième étape d'hydrolyse, on soumet l'hydrolysat issu de l'étape 1, à ce même traitement, mais en utilisant cette fois une quantité d'eau en excès stoechiométrique, la source d'eau étant constituée par une solution d'HCl ayant une concentration prédéterminée en HCl.

Ce procédé est censé permettre l'obtention d'un hydrolysat de polyorganosiloxane, sans souffrir des inconvénients des techniques connues à une étape d'hydrolyse, et qui font intervenir soit un excès d'eau, soit un déficit d'eau, soit une quantité stoechiométrique d'eau, par rapport à l'organohalosilane. Ce procédé permettrait également de réguler la viscosité du polyorganosiloxane obtenu.

Ce procédé est imparfait en ce qu'il produit de l'HCl gazeux sous faible pression, ce qui complique la récupération et la valorisation de ce dernier.

Le principe d'une hydrolyse en deux étapes est également retenu dans le procédé de fabrication de polydiméthylsiloxane, décrit dans la demande de brevet européen N° 0 658 588. Selon ce procédé, on fait réagir dans une première étape du diméthyldichlorosilane avec de l'eau, amenée par une solution aqueuse d'acide chlorhydrique titrant 25 % en poids, pour obtenir un hydrolysat brut constitué de polydiméthylsiloxanes cycliques et linéaires α,ω-dichlorés et de gaz chlorhydrique, à l'exclusion d'une solution aqueuse d'HCl.

Il est à noter, par ailleurs, que dans les conditions réactionnelles de l'étape 1, la solution n'est pas saturée en HCl.

Dans une deuxième étape, on traite l'hydrolysat brut à la vapeur d'eau pour réduire sa teneur en chlore par hydrolyse complémentaire, qui entraîne également la formation d'acide chlorhydrique aqueux. Ce dernier est recyclé dans la première étape du procédé.

La pression en gaz chlorhydrique dans la première étape est comprise entre 0,15 et 0,5 MPa, en particulier entre 0,25 et 0,35 MPa. La température de l'étape 1 est la température ambiante, alors que pour l'étape 2, il est fait référence à une température comprise entre 110 et 160° C. Au terme de la première étape d'hydrolyse, le polydiméthylsiloxane obtenu comprend 50 % d'oligomères cycliques et 50 % d'oligomères linéaires α,ω-chlorés.

La mise en oeuvre d'un tel titre en HCl dans l'étape 1 d'hydrolyse et d'une température élevée en étape 2, rend difficile la stabilisation et la maîtrise de la viscosité des produits finaux.

La demande de brevet DD-227 145 décrit un procédé de préparation d'hydrolysat de diméthyldichlorosilane neutre, présentant une faible viscosité et une stabilité au stockage, de même qu'une teneur résiduelle en liaisons SiCl inférieure à 10 ppm. Ce procédé comprend un traitement d'élimination des restes de groupements SiCl et d'HCl aqueux contenus dans un hydrolysat de diméthyldichlorosilane, par passage de celui-ci, après lavage et/ou neutralisation, au travers d'un matériau poreux se présentant sous forme de feuille. Ce matériau est un matériau fibreux du type papier ou textile (laine, cellulose, polyester, fibres de verre). Une telle filtration s'opère à température ambiante et permet d'obtenir un hydrolysat présentant une teneur résiduelle en SiCl de 2 ppm et une concentration en HCl non détectable.

Ce procédé de traitement hydrolysat de dichlorodiméthylsilane permet, certes, une réduction des impuretés dans le produit final, mais l'efficacité d'un tel procédé ne peut être vraiment garantie que si les étapes antérieures conduisent à un produit propre à être traité par coalescence sur support poreux.

Or, il n'en va pas ainsi pour l'hydrolysat selon le DD-227 145.

Il ressort de cette revue de l'état de la technique qu'il existe une carence en un procédé de préparation de polyorganosiloxanes par hydrolyse d'organohalosilanes,
- qui permette d'obtenir un produit d'hydrolyse du type halogénure d'hydrogène se présentant sous forme gazeuse et sous pression,
- qui permette l'élimination la plus complète possible des liaisons ≡SiX;
- qui conduise à un hydrolysat polyorganosiloxane final, exempt ou quasiment exempt de gouttelettes aqueuses acides ;
- qui permette d'éviter la formation de quantités exagérées d'effluents aqueux acides, posant un problème de retraitement,
- qui permette d'assurer un contrôle de la viscosité du polyorganosiloxane,
- et qui enfin permette de fabriquer un polyorganosiloxane de haute qualité et en particulier de haute pureté, de manière à lui garantir une stabilité optimale.

L'un des objectifs essentiels de la présente invention est de pallier cette carence, en fournissant un procédé qui réponde aux spécifications visées ci-dessus.

Un autre objectif essentiel de la présente invention est de fournir un procédé de préparation de polyorganosiloxane, dans lequel l'hydrolyse se déroule en présence d'un déficit d'eau, par rapport aux quantités stochiométriques, dans la phase initiale d'hydrolyse, et qui, en outre, ne nécessite pas l'emploi subséquent de grandes quantités d'eau pour éliminer les restes Si-halogène terminaux, encore présents en trop grande concentration après la première hydrolyse. Cela évite la production d'effluents aqueux halogénés délicats à recycler et/ou à retraiter, en raison des impuretés siloxaniques qu'elles contiennent toujours.

Un autre objectif essentiel de la présente invention est de fournir un procédé de préparation de polyorganosiloxanes par hydrolyse d'organohalosilanes, qui offre la possibilité d'assurer un contrôle constant de la viscosité du milieu réactionnel.

Un autre objectif de la présente invention est de fournir un procédé d'hydrolyse d'organohalosilanes conduisant à des polyorganosiloxanes, exempts ou pratiquement exempts d'halogènes résiduels, de même que de gouttelettes aqueuses contenant un soluté formé par l'halogénure d'hydrogène issu de l'hydrolyse.

Un autre objectif essentiel de la présente invention est de fournir un procédé de préparation de polyorganosiloxanes par hydrolyse d'organohalosilanes, qui soit aisé à mettre en oeuvre et économique (hauts niveaux de productivité et de rendement).

Un autre objectif essentiel de la présente invention est de fournir un procédé d'hydrolyse d'organohalosilanes conduisant à des polyorganosiloxanes, lequel procédé se devant d'être apte à être mis en oeuvre selon un mode continu ou discontinu, en satisfaisant dans l'un ou l'autre cas, aux spécifications visées ci-dessus.

Ces objectifs, parmi d'autres, sont atteints par la présente invention qui concerne un procédé de préparation de polyorganosiloxanes par hydrolyse d'organohalosilanes de formule (**I**) RₐR¹_{b}SiX_{c}, dans laquelle :
- R, R¹ sont des radicaux identiques ou différents et représentent l'hydrogène ou des alkyles linéaires ou ramifiés en C1-C6, des aryles en C₆-C₁₂, des alkylaryles ou des aralkyles,
- X représente un halogène,
- et a + b + c = 4 et 0 < c < 4 ;
caractérisé
- en ce qu'il consiste essentiellement à mettre en oeuvre :
   ■ au moins trois étapes d'hydrolyse successives (1), (2), (3), dans lesquelles le milieu réactionnel est apte à exercer une force hydrolysante croissante sur les organohalosilanes (**I**),
   ■ et, éventuellement, au moins une étape de coalescence (4),
- en ce que l'étape (1) est une hydrolyse sous pression en présence d'une solution S₁ aqueuse d'halogénure d'hydrogène saturée, à la pression et à la température du milieu réactionnel,
- et en ce que l'on fait intervenir à titre de source d'eau dans l'étape (3₁) d'hydrolyse poussée, un liquide constitué par de l'eau exempte ou pratiquement exempte de solutés dissous et/ou par une ou plusieurs solution(s) aqueuse(s) d'halogénure d'hydrogène, par exemple S₃ et/ou S₄ tels que définis infra.

La Demanderesse a donc eu le mérite de mettre en évidence, que, de manière tout à fait surprenante et inattendue, la combinaison :
* de première part, d'au moins trois étapes d'hydrolyse successives avec une force hydrolysante croissante
* de deuxième part, d'une première étape d'hydrolyse sous pression, avec une phase aqueuse saturée en halogénure d'hydrogène correspondant aux produits d'hydrolyse des liaisons halosilanes ≡SiX,
* et, de troisième part, d'une troisième étape d'hydrolyse ne nécessitant l'addition (donc la consommation) que d'eau à l'exclusion d'une solution aqueuse exogène saline ou alcaline,
permet d'obtenir des polyorganosiloxanes purs, exempts de SiX résiduels et de traces de phase aqueuse.

Un tel résultat est d'autant plus avantageux qu'il peut être atteint de manière relativement aisée et économique, avec une bonne productivité et de bons rendements, selon un mode continu ou discontinu.

En outre, le procédé selon l'invention n'est pas de nature à générer de grandes quantités d'effluents pollués par des halogénures. Cela simplifie donc grandement le procédé au regard de son impact sur l'environnement.

Il doit être également relevé que le problème du contrôle de la viscosité du milieu réactionnel, qui découle d'ailleurs directement de la maîtrise du titre en halogénure d'hydrogène, est résolu grâce à la méthodologie selon l'invention, qui repose sur la mise en oeuvre de 3 étapes d'hydrolyse avec une force hydrolysante croissante et sur la saturation de la phase aqueuse de départ en halogénure d'hydrogène.

Sans vouloir être lié par la théorie, il est permis de penser que le procédé selon l'invention permet une optimisation de l'hydrolyse en minimisant les phénomènes de blocage de l'eau d'hydrolyse, liés à l'hydratation de l'halogénure d'hydrogène.

Par force hydrolysante croissante, on entend, au sens de la présente invention un gradient de nucléophilie du milieu réactionnel, gradient qui s'étale sur les trois étapes d'hydrolyse (1) (2) et (3). Plus précisément, cela signifie que la réactivité de la phase aqueuse vis-à-vis des liaisons ≡SiX croît au fur et à mesure des étapes 1,2 et 3.

S'agissant de la notion de saturation en halogénure d'hydrogène de la phase aqueuse du milieu réactionnel de l'étape (1), il faut comprendre, au sens de l'invention, que l'on est au maximum de concentration en soluté halogénure d'hydrogène dans l'eau. C'est-à-dire que le milieu réactionnel se trouve dans une atmosphère gazeuse formée par l'halogénure d'hydrogène gazeux.

Il est clair que ce point de saturation dépend naturellement de la nature du soluté ainsi que des conditions de température et de pression du milieu. L'homme du métier est parfaitement à même de gérer cette question de la saturation de la solution S₁ de l'étape (1).

L'eau " pure "exempte ou pratiquement exempte de solutés dissous, dont il est question dans le procédé selon l'invention, est définie ainsi pour la distinguer des solutions, en particulier des solutions salines ou alcalines. Il s'agit en pratique d'eau déminéralisée classique obtenue à partir d'une eau courante provenant du réseau de distribution. Ordinairement, la déminéralisation s'effectue par passage sur résine(s) échangeuse(s) d'ions. Pour plus de détails à ce propos, on se réferera à " l'Encyclopédie des Sciences et des Techniques " Ed. Les presses de la cité - 1972 P.149-150 -, qui donne notamment un schéma de déminéralisation faisant intervenir des résines échangeuses d'ions. On pourra également se reporter, quant à la déminéralisation, à " l'Encyclopedia of Chemical Technology - Third Edition - Volume 13 - P. 700-701 Ed. John Wiley & Sons - 1981.

Cette eau déminéralisée ne contient pas de quantités significatives de solutés. Selon une première modalité préférée du procédé selon l'invention, la fourniture en eau du milieu d'hydrolyse poussée (3₁) peut être effectuée par apport, d'une part, d'eau " pure " telle que définie ci-dessus et, d'autre part, d'au moins une solution aqueuse d'halogénure d'hydrogène (chlorhydrique). Cette (ou ces) solution(s) pourvoyeuse(s) d'eau est (sont) de préférence formée(s) par un ou plusieurs effluents aval (recyclage) et plus spécialement encore par les effluents S₃ et/ou S₄ tels que définis infra.

Selon une deuxième modalité encore plus préférée, la majeure partie de l'apport en eau en (3₁) est assurée par au moins une solution d'halogénure d'hydrogène. Dans ce cas de figure, l'eau " pure " intervient, à titre de complément minoritaire en eau nécessaire à l'hydrolyse poussée (3₁).

La (ou les) solution(s) pourvoyeuse(s) d'eau est (sont) avantageusement constituée(s) par des effluents, de préférence aval, générés par le procédé (recyclage) et, plus spécialement encore, par les effluents aval S₃ et éventuellement S₄ des étapes (3₂) et (4) respectivement.

Conformément à un mode préféré de mise en oeuvre du procédé selon l'invention, on adopte un mode de fonctionnement en continu.

Par ailleurs, sans que cela ne soit limitatif, l'halogène X est de préférence le chlore, de sorte que l'halogénure produit dans ce cas est HCl. Pour simplifier on emploiera indifféremment dans la suite du présent exposé, halogène X ou chlore (Cl) ainsi qu'halogénure d'hydrogène (HX) et chlorure d'hydrogène (HCl).

Naturellement, il est préférable d'employer un seul et même type d'halogénure d'hydrogène (e.g. HCl) dans le cadre du procédé selon l'invention. Mais cette dernière couvre également l'emploi de différents halogénures d'hydrogène.

De préférence, l'étape (1) d'hydrolyse sous pression se décompose en :
Δ au moins une hydrolyse (1₁) d'organohalosilanes (**I**) conduisant à un hydrolysat brut au moins triphasique comprenant :
   - 1 - une phase gazeuse formée par l'halogénure d'hydrogène gazeux sous pression,
   - 2 - un fluide siloxane F₁ constitué essentiellement d'oligomères linéaires α,ω-dihalogénés et éventuellement, dans une moindre mesure, d'oligomères cycliques,
   - 3 - et une phase aqueuse comportant la solution S₁ saturée d'halogénure d'hydrogène ;
Δ au moins une séparation (1₂) Gaz/Liquide visant à recueillir l'halogénure d'hydrogène gazeux sous pression d'une part, et un mélange F₁/S₁, d'autre part ;
Δ au moins une séparation (1₃) Liquide / Liquide permettant de récupérer F₁ et S_{1'}, cette dernière étant avantageusement recyclée en (1₁) ;
Δ éventuellement au moins une purification (1₄) du gaz recueilli en (1₂), de préférence par condensation ;
Δ et éventuellement au moins un dégazage (1₅) supplémentaire du fluide F₁ recueilli en (1₃), de préférence par décompression.

Avantageusement, cette réaction (1₁) se déroule en continu sous forte agitation dans une enceinte close, par exemple à une température comprise entre 10 et 70° C et sous une pression déterminée par le gaz d'halogénure d'hydrogène produit par hydrolyse.

En pratique, la pression en halogénure d'hydrogène gazeux, est ajustée à une valeur supérieure ou égale à 0,10 MPa et de préférence comprise entre 0,15 et 1 MPa.

On règle les débits d'entrée des réactifs du réacteur de l'étape (1₁), de telle sorte que le rapport massique de phase à l'alimentation RM₁ = *phase aqueuse* / *organohalosilane (I)* soit ≥ 2 et de préférence compris entre 3 et 15.

Ce RM est l'une des caractéristiques importantes du procédé selon l'invention, car il détermine conjointement avec la concentration en halogénure d'hydrogène de la phase aqueuse et avec le régime d'agitation (entre autres), la concentration en eau à l'interface phase aqueuse / organohalosilane (**I**). Et la force hydrolysante du milieu est, bien évidemment, dépendante de cette concentration interfaciale en eau.

L'hydrolysat brut obtenu en fin d'étape (1₁) est avantageusement triphasique.

En pratique, F₁ est constitué par un mélange d'oligoorganosiloxanes linéaires α,ω-dihalogénés et d'oligoorganosiloxanes cycliques dans lequel :
- les premiers représentent au moins 50, de préférence au moins 60 % en moles du mélange,
- et les seconds au plus 50, de préférence au plus 40 % en moles de mélange.

Ce fluide siloxane F₁ que l'on dénomme également "chlorosilox" renferme, par exemple, environ 7 à 13 % en poids d'halogène résiduel de types HX et ≡SiX.

Avantageusement, la durée de la réaction de l'étape (1₁) est comprise entre 30 s et 5 min, de préférence entre 1 et 2 min.

L'halogénure d'hydrogène gazeux obtenu sous pression à l'issue de l'étape (1₂) de séparation gaz/liquide, peut être utilement valorisé, par exemple s'agissant d'HCl, dans la préparation industrielle (à gros débit) de chlorure de méthyle, par réaction avec du méthanol. Le chlorure de méthyle est une matière première de base dans la chimie des organosilanes.

De manière facultative, on peut purifier le gaz sous pression obtenu en (1₂), grâce à un traitement (1₄), qui peut être, par exemple, une condensation à une température comprise entre 0° C et -10° C, ce qui permet d'éliminer des polysiloxanes légers volatils.

Comme précisé ci-dessus, il est avantageux de recycler la solution chlorhydrique S_{1'} récupérée à l'issue de la séparation liquide/liquide (1₃). Un tel recyclage dans l'étape (1₁) influe sur la qualité de l'huile ou du fluide siloxane final. Suivant une disposition préférée de l'invention, le recyclage constitue la voie unique ou très majoritaire d'alimentation en solution chlorhydrique S₁ de la réaction de l'étape (1₁). En conséquence, le rapport massique de recyclage de S_{1'} sur (**I**) sera, dans cette hypothèse, équivalent au RM₁ ci-dessus défini, c'est-à-dire supérieur ou égal à 2, et de préférence compris entre 3 et 15 ou très voisin de RM₁.

L'éventuel dégazage (1₅) de F₁ est réalisé, par exemple, par l'intermédiaire d'une décompression flash avec un Δ P de l'ordre de 0,2 MPa, e.g. On récupère ainsi de l'acide chlorhydrique gazeux pouvant être directement revalorisé vers une synthèse industrielle. Un tel dégazage (1₅) permet d'augmenter le rendement en acide chlorhydrique gazeux d'au moins 3 %.

L'étape (2) comprend au moins une hydrolyse humide (2₁) se déroulant, sous agitation, à une température comprise entre 10 et 50° C et dans laquelle le fluide siloxane F₁ issu de l'étape (1) est mis à réagir avec une solution aqueuse S₂₁ d'halogénure d'hydrogène. La concentration de ce soluté dans S₂₁ correspond à une fraction de la concentration de saturation de référence (Csr), du même soluté dans une solution aqueuse, et ce dans les mêmes conditions de température et de pression, cette fraction représentant 45 à 75 %, de préférence 50 à 72 % de Csr. Le rapport massique de phase à l'alimentation RM₂ *= Phase aqueuse* / *Fluide F*₁ est régulé à une valeur supérieure ou égale à 1,5, de préférence comprise entre 2 et 10, de manière à permettre l'hydrolyse des liaisons ≡SiX du fluide siloxane F₁, à hauteur d'au moins 95 %, de préférence d'au moins 98 %, et à obtenir ainsi un fluide siloxane F₂ constitué essentiellement d'oligomères linéaires α,ω-dihydroxylés ou α,ω-dihalogénés et, éventuellement, dans une moindre mesure, d'oligomères cycliques. Cette hydrolyse humide fait intervenir de l'eau et plus précisément une phase aqueuse liquide à la pression et à la température réactionnelles, de préférence à l'exclusion d'eau sous forme vapeur.

Dans le cadre de cette étape (2) d'hydrolyse humide, on met en oeuvre une force hydrolysante supérieure à celle de l'étape (1), une telle augmentation étant acquise par accroissement de la part relative de l'eau dans le milieu d'hydrolyse et donc, par diminution du titre en HCl aqueux. Conformément à l'invention, cette hydrolyse humide 2 vise à amener l'avancement de l'hydrolyse des liaisons SiX à une valeur suffisamment proche de 100 %, c'est-à-dire par exemple ≥ à 95 %, de préférence ≥ à 98 %.

Le réglage de la force hydrolysante du milieu hydrolyse de l'étape (2) peut être appréhendé, notamment :
- au travers du titre en HCl, qui est donc avantageusement une fraction de 45 à 75 % de la Csr,
- et au travers de la température.

L'une des caractéristiques originales du procédé selon l'invention est, pour des conditions expérimentales données, de jouer sur le titre en HCl pour ajuster l'avancement de la réaction.

En tout état de cause, ce titre est particulièrement critique, car les chlorosiloxanes hydrolysés dans l'étape (2) comprennent à peu près autant de liaisons ≡ SiX que de liaisons ≡SiOH. Cela signifie que les risques de polycondensation sont grands et l'on sait que la conséquence majeure d'une telle réaction, est une augmentation rédhibitoire de la viscosité des polyorganosiloxanes et donc du milieu réactionnel tout entier.

De préférence, le besoin en eau à l'étape (2₁) [phase aqueuse ou solution S₂₁ formant le milieu réactionnel de (2₁)] est assuré, pour l'essentiel, par l'eau contenue dans la solution chlorhydrique S₃ (effluent aval de l'étape 3). Un complément minoritaire peut être apporté par l'effluent S₂₂ issu de l'étape (2₂). Cette utilisation d'effluents aval comme matières premières est économiquement intéressante, notamment en ce qu'elle permet l'augmentation du rendement en HCl.

Un autre paramètre important est la durée de réaction entre F₁ et la phase aqueuse S₂₁, dans l'étape (2₁). Avantageusement, cette durée est comprise entre 4 et 20 min, de préférence entre 7 et 12 min.

Pour l'étape (2₁), il est préférable de maintenir un mélange liquide/liquide homogène, grâce à une agitation importante dans le milieu réactionnel (e.g. réacteur agité ou boucle fermée).

En pratique, le fluide siloxane F₂ - également désigné par le terme "Silox acide" - contient, par exemple, environ 0,6 à 3 % en poids d'halogène résiduel de types HX et ≡SiX. De préférence, cette concentration en halogène résiduel dans F₂ est de l'ordre de 1,5 ± 0,5 % en poids.

A titre d'exemple, la concentration en halogénure d'hydrogène dans S₂₁ est de l'ordre de 30 %, dans les conditions expérimentales données ci-après : la température est égale à 25° C environ et la durée réactionnelle de (2₁) est comprise entre 7 à 12 min.

Suivant une disposition particulière de l'invention, l'étape (2) comporte en outre au moins une opération de séparation (2₂), de préférence par décantation, du fluide siloxane F₂ issu de (2₁) et de la solution aqueuse concentrée S₂₂ résultant de la transformation de S₂₁ après hydrolyse humide (2₁) ; Cette solution S₂₂ est, avantageusement au moins en partie recyclée dans l'hydrolyse humide (2₁) de l'étape (2) et/ou dans l'hydrolyse sous pression (1₁) de l'étape (1), à titre d'appoint en eau d'hydrolyse. Les possibilités de recyclage du reliquat de S₂₂ dans l'étape (1₁) et/ou l'étape (2₁) contribuent à l'économie du procédé selon l'invention.

La séparation (2₂) est, par exemple, une décantation gravitaire.

Le fluide siloxane F₂ issu de l'étape (2) contient encore un peu de liaison ≡SiX à hydrolyser ainsi que des gouttelettes de solution S₂₂ halogénées (chlorhydriques). Aussi, pour parachever l'hydrolyse et l'épuration, on met ensuite en oeuvre l'étape (3), qui comprend au moins un traitement (3₁) d'hydrolyse poussée du fluide siloxanique F₂ obtenu en (2), à l'aide d'eau rajoutée dans le milieu, par l'intermédiaire d'eau " pure " et/ou d'eau de solution(s) d'halogénure d'hydrogène (e.g. chlorhydriques) de préférence celles provenant d'effluents aval recyclés.

La teneur en eau du milieu réactionnel de l'hydrolyse poussée (3₁) est supérieure ou égale à 90 % en poids, de préférence ≥ 94 % en poids, et plus préférentiellement encore ≥ comprise entre 94 et 97 % en poids.

Les quantités de F₂, d'eau " pure " et/ou de solution(s) [chlorhydrique(s)] de préférence issue(s) du recyclage, et plus préférentiellement encore constituée(s) par S₃ et/ou S₄ provenant de (3₂) et/ou (4) et mises en oeuvre en (3₁), sont ajustées de telle sorte que le rapport massique de phase à l'alimentation RM₃ *= phase aqueuse* / *Fluide F*₂ *(silox acide)* soit supérieur ou égal à 1,5 et, de préférence soit compris entre 2 et 10.

Cette troisième étape est avantageusement mise en oeuvre en utilisant, à titre de source d'eau pour le milieu d'hydrolyse poussée (3₁), de l'eau " pure " et au moins une solution aqueuse d'halogénure d'hydrogène (e.g. chlorhydrique), avantageusement constituée par au moins un effluent aval, de préférence S₃ et/ou S₄, ainsi recyclé(s) en (3₁). Ce recyclage préféré subvient à une partie de l'alimentation en eau du milieu réactionnel de l'étape (3₁). En pratique, il est tout à fait souhaitable que l'essentiel de l'apport en eau dans (3₁) se fasse au moyen d'au moins une solution aqueuse chlorhydrique de recyclage, de préférence au moyen de S₃ et éventuellement de S₄.

On conçoit aisément que la mise en oeuvre d'eau comme réactif prépondérant de l'étape 3₁ d'hydrolyse, de préférence issue pour l'essentiel d'une solution chlorhydrique formée par un effluent aval comme S₃ et éventuellement S₄ recyclé, aille dans le sens de la simplification et de l'économie du procédé.

En effet, l'effluent S₃ produit au terme de (3₂) est valorisable par recyclage. Il ne contient pas d'impuretés ou de polluants (sels) faisant de lui un déchet à traiter. Cela soulage donc le procédé en terme de gestion des déchets.

En outre, cette introduction en 3₁ d'eau déminéralisée " pure " et/ou de solution d'halogénure d'hydrogène (e.g. HCl) favorise l'obtention d'un bon rendement en halogénure d'hydrogène (HCl) et donc en POS.

Ce traitement (3₁ permet ainsi de finir l'hydrolyse des liaisons ≡SiX résiduelles dans F₂, qui se trouve alors transformé en fluide siloxane F₃, constitué essentiellement d'oligomères linéaires α,ω-dihydroxylés et dans une moindre mesure, d'oligomères cycliques.

Avantageusement, le temps de réaction de l'hydrolyse poussée (3₁) est supérieur ou égal à 5 min, de préférence à 10 min. Mais, il va de soi que, de toutes façons, le terme de cette réaction (3₁) dépendra du moment où la totalité des groupes ≡SiX seront hydrolysés. Il appartient à l'homme du métier d'apprécier et de déterminer ce moment, afin de minimaliser la durée du procédé industriel.

Suivant une modalité avantageuse de l'invention, l'étape (3₁) se déroule à une température supérieure ou égale à 60° C, de préférence comprise entre 70 et 100° C et, plus préférentiellement encore entre 80 et 90° C.

Avantageusement, F₃ présente une teneur en halogène résiduel de types HX et ≡SiX inférieure ou égale à 60 ppm, de préférence inférieure ou égale à 30 ppm ; à noter que la teneur en halogène résiduel de type ≡SiX est généralement inférieure à 1 ppm. La réaction est complète.

En pratique, il est avantageux de prévoir une homogénéisation du milieu réactionnel lors de l'étape (3₁) (e.g. réacteur agité ou boucle fermée).

L'étape (3) comporte, en sus, au moins une opération de séparation (3₂), de préférence par décantation, du fluide siloxane F₃ issu de (3₁) et de la phase aqueuse S₃, cette dernière, une fois récupérée, pouvant être au moins en partie recyclée au moins dans l'étape (3₁) et éventuellement dans l'étape (2₁) pour autant que cette phase aqueuse S₃ ne comporte pas de sel. Cette décantation permet de recueillir une huile ou un fluide siloxane F₃, dans lequel toutes ou sensiblement toutes les liaisons ≡SiX sont hydrolysées.

Le fluide siloxane F₃ récupéré en fin d'étape (3₂) de séparation, est certes totalement hydrolysé, mais comporte encore des gouttelettes de phase aqueuse S₄.

Aussi, selon une modalité facultative et néanmoins intéressante de l'invention, F₃ est soumis à une étape (4) de coalescence consistant essentiellement à faire passer le fluide F₃ au travers d'un matériau poreux, de façon à extraire les gouttelettes de phase aqueuse acide S₄ contenues dans F₃ et à obtenir un fluide siloxane F₄ constitué essentiellement d'oligomères linéaires α,ω-dihydroxylés, ayant une teneur en halogène résiduel inférieure ou égale à 10 ppm, généralement à 2 ppm, et, dans une moindre mesure d'oligomères cycliques (30 %). Outre F₄, on récupère une phase aqueuse S₄ (solution chlorhydrique) à l'issue de cette étape (4). Cette solution S₄ peut, comme cela est mentionné supra, être recyclée dans les étapes d'hydrolyse amont, de préférence dans l'étape (3₁).

Avantageusement, le matériau poreux mis en oeuvre à l'étape (4), est sélectionné dans le groupe de matériaux suivants :
- silices de précipitation,
- supports fibreux tissés ou non par exemple à base de fibres de verre et/ou de fibres polymères (cellulose, polyester, polypropylène), fibres de verre,
- des zéolithes,
- et leurs mélanges.

Suivant une caractéristique originale et avantageuse de l'invention, les fluides siloxane F₃ et le fluide siloxane F₄ exempt de liaisons ≡SiX et ne contenant pratiquement plus de gouttelettes de phase aqueuse, présentent une viscosité à 25° C inférieure ou égale à 50 mPa.s, de préférence à 40 mPa.s, et plus préférentiellement encore comprise entre 25 mPa.s et 35 mPa.s.

Une viscosité aussi faible est particulièrement bienvenue, dans la mesure uù cela facilite significativement la manipulation et le traitement des masses traitées dans le procédé. Qui plus est, cela rend parfaitement envisageable et faisable, la succession d'étapes typiques du procédé selon l'invention, pour obtenir in fine un polyorganosiloxane de haute qualité et de haute pureté, comme cela est indiqué supra.

Plus précisément, le traitement de percolation de F₃ au travers d'un support poreux permettant la coalescence des gouttelettes résiduelles de phase aqueuse, s'effectue de préférence selon un flux (débit/unité de surface) de 1 à 10 cm/min et à une température de l'ordre de 50°C , par exemple.

Avantageusement, la teneur finale en oligomères linéaires α,ω-dihalogénés de F₄ est comprise entre 50 et 70 % en poids, le complément étant constitué d'oligoorganosiloxanes cycliques.

Dans la mesure où il a été vu ci-dessus que l'halogène X préféré, dans le cadre de l'invention, est le chlore, on peut préciser, à titre non limitatif, que l'on privilégiera Me₂SiCl₂, MeHSiCl₂, ou Me₃SiCl, à titre d'organohalosilane de départ.

Quel que soit le mode de mise en oeuvre du procédé selon l'invention continu ou discontinu, l'homme du métier sera parfaitement à même de sélectionner les appareillages nécessaires (réacteurs fermés ou non, décanteurs, détendeurs, coalesceurs...) pour réaliser un dispositif de mise en oeuvre du procédé considéré.

L'invention sera mieux comprise grâce aux exemples qui suivent, de préparation d'huile F₄ polydiméthylsiloxane, par hydrolyse de diméthyldichlorosilane (Me₂SiCl₂). Ces exemples font bien ressortir tous les avantages et les variantes de mise en oeuvre envisageables pour le procédé selon l'invention.

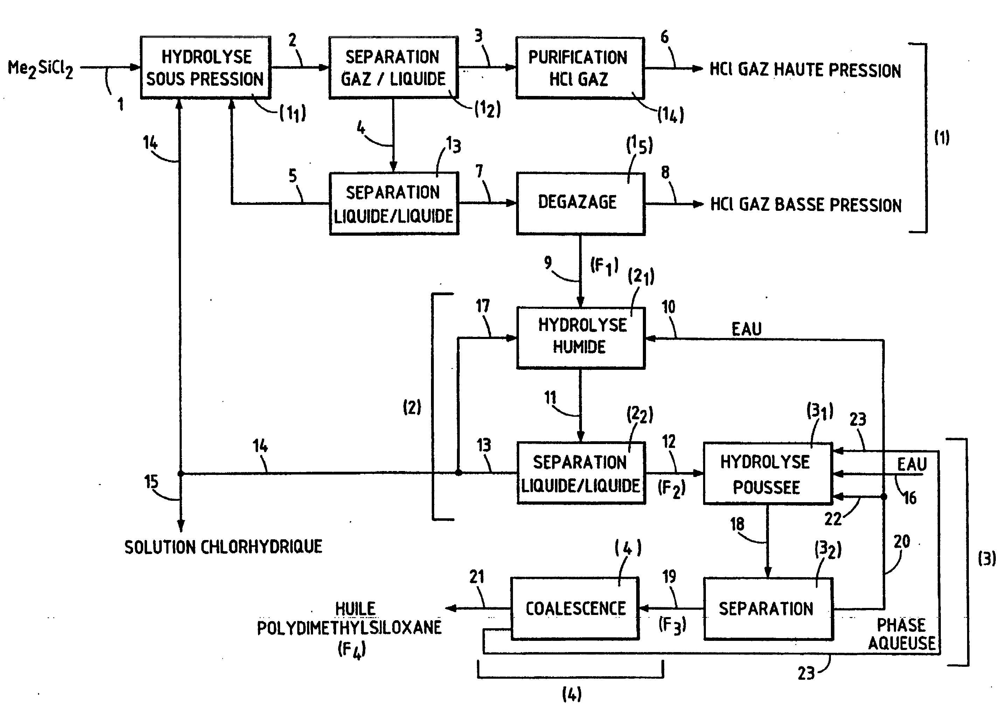

La figure unique annexée montre l'organigramme du procédé pris à titre d'exemple non limitatif, pour illustrer l'invention. Il s'agit d'un procédé fonctionnant en régime continu, dans lequel un flux 1 de Me₂ SiCl₂ est soumis à l'étape (1₁) d'hydrolyse sous pression. Les flux 14 et 5 de solution chlorhydrique S₁ respectivement formés par les solutions d'HCl recyclées S_{1'} et S₂₂ des étapes 1₃ et 2₂, interviennent eux-aussi directement dans l'hydrolyse (1₁).

Cette dernière produit un hydrolysat brut comprenant un fluide siloxane F₁, de l'HCL gazeux et une phase aqueuse formée par une solution saturée S₁ d'HCl. Cette hydrolysat est représenté par le flux 2, lequel est soumis à l'étape (1₂) de séparation gaz/liquide, qui conduit à un flux gazeux 3 que l'on soumet à une purification (1₄) par condensation à - 5° C, ladite purification (1₄) permettant d'obtenir de l'HCl gazeux sous haute pression selon un flux 6. La séparation (1₂) génère également un flux 4 formé par un mélange liquide/liquide, que l'on soumet à une séparation (1₃), au terme de laquelle on produit, d'une part, un flux 5 de solution S_{1'} recyclée dans (1₁) et un flux 7 formé par un fluide siloxane (chlorosilox F1).

Le chlorosilox F₁ est soumis à un dégazage (1₅) par décompression, ce qui génère un flux gazeux 8 d'HCl basse pression et un flux liquide 9 formé par F₁ dégazé.

Ce dernier est soumis à une hydrolyse humide (2₁), qui requiert un flux 10 d'alimentation en eau, via la solution S₃ ou phase aqueuse 20 recyclée en sortie d'étape (3₂) et un flux 17 d'alimentation en solution S₂₂ d'HCl aqueux recyclée de (2₂). L'hydrolyse humide (2₁) conduit à un flux 11 constitué par un mélange liquide de fluide siloxane F₂ et de solution S₂₂ d'HCl. Ce flux 11 est soumis à une séparation liquide/liquide (2₂) par décantation. Cela génère un flux 13 de solution d'HCl aqueux S₂₂, se décomposant en flux 17 de recyclage pour l'étape (2₁) et en un flux 14 de recyclage de S₂₂ pour l'étape (1₁). L'excès de S₂₂ recyclé par le flux 14 est éliminé via un flux 15. La séparation (2₂) conduit également à un flux 12 correspondant au fluide siloxane F₂, qui est soumis à une hydrolyse poussée (3₁), nécessitant une alimentation par un flux 16 d'eau déminéralisée, par un flux 22 de solution aqueuse S₃ décantée provenant (flux 20) de la séparation (3₂) et par un flux 17 formé par la solution S₄ d'HCl provenant de l'étape 4. Le flux 18 émergeant de l'étape (3₁) est un mélange liquide de polyorganosiloxane et de solution chlorhydrique S₃. Après séparation (3₂), le flux 18 conduit à un flux 20 de solution chlorhydrique S₃ et à un flux 19 de fluide siloxane F₃. Ce flux 20 de S₃ donne naissance au flux de recyclage 22 susévoqué et à un autre flux de recyclage 10 alimentant en S₃ le milieu d'hydrolyse humide (2₁).

F₃ est enfin soumis au traitement de coalescence (4), ce qui génère un flux 21 constitué par le fluide siloxane F₄ ou huile polydiméthylsiloxane débarrassée de la quasi-totalité des gouttelettes d'HCl aqueux S₄. Ces dernières constituent éventuellement un flux 23 de recyclage de S₄ dans l'étape (3₁).

Le procédé selon l'invention permet ainsi d'envisager un mode de fonctionnement en continu, dans lequel sont prévus, d'une part, 3 étapes d'hydrolyse déterminant une force hydrolysante croissante dans le sens du flux de préparation de POS, et d'autre part, un contre-courant de solution aqueuse halogénée (chlorhydrique) par le jeu des recyclages de phases aqueuses : de préférence S_{1'} en (1₁), S₂₂ en (1₁) et (2₁), S₃ en (3₁) et (2₁), S₄ en (3₁), complétés par une adduction d'eau " pure ".

### EXEMPLE :

### Etape 1 :

Dans un ensemble réacteur/dégazeur/décanteur fonctionnant à la pression de service b = 0,3 Mpa absolu et à une température T = 30° C, on met en place une alimentation en :
- Me₂SiCl₂ de ***10 kg*/*h*,**
- en solution d'HCl titrant ***30 %*,** de ***1,8 kg*/*h*** (S₂₂),
- en solution aqueuse HCl titrant 44 %, à raison de ***98 kg*/*h*** (S_{1'}),
de telle sorte que le rapport massique d'alimentation des phases aqueuse et siloxanique RM₁ est de ***10***.

Le chlorosilox ou fluide siloxanique F₁ obtenu à l'issue de l'étape (1₅) est produit à raison de ***6,15 kg*/*h***.

La composition pondérale de F₁ est la suivante :
- ***8,8 %*** de chlore résiduel (de types HCl et ≡SiCl),
- ***30 %*** d'oligoorganosiloxanes cycliques,
- ***70 %*** d'oligoorganosiloxanes linéaires α,ω-chlorés.

Le chlorosilox F₁ présente une viscosité de 4,7 mPa.s.

### Etape 2 :

Le fluide siloxanique F₁ est introduit dans un autre ensemble réacteur/décanteur à raison de ***6,15 kg*/*h***. On alimente concomitamment cet ensemble réacteur/décanteur avec ***une solution aqueuse d'HCl à 5 %*** (S₃) à raison de ***1,45 kg*/*h*** et avec une solution aqueuse d'HCl ***30 %*** (S₂₂) à raison de ***25 kg*/*h***, de telle sorte que RM₂ = 4,4.

La pression régnant à l'intérieur du réacteur de l'étape (2) est de 0,1 MPa et la température de l'ordre de 30° C.

Le fluide siloxanique F₂ obtenu à l'issue de l'étape (2₂) (dénommé également silox acide) est produit selon un débit de ***5,8 kg*/*h***. Ce silox acide F₂ comprend 1,3 % en poids de chlore résiduel (de types HCl et ≡SiCl).

La viscosité du silox acide F₂ est de ***33 mPa.s*** à 25° C.

F₂ comprend ***33 %*** en poids de polydiméthylsiloxane cyclique et ***67 %*** en poids de polydiméthylsiloxane α,ω-dihydroxylé.

### Etape 3 :

Le silox acide F₂ est alimenté dans un ensemble réacteur/décanteur à raison de ***5,8 kg*/*h***, avec ***de l'eau "pure" et selon un débit de 1,4 kg*/*h*** et avec ***32 kg*/*h*** de phase aqueuse (S₃) recyclée issue de l'étape de séparation (3₂).

On injecte également ***0,02 kg*/*h*** d'eau acide récupérée à l'étape 4.

Le RM₃ = ***5*,*76***.

***La concentration en HCl*** dans la phase aqueuse est de ***5 %*** en poids.

La pression régnant dans l'ensemble réacteur/décanteur est de 0,1 MPa et la température de 85° C.

Le fluide siloxane F₃ obtenu à l'issue de l'étape (3₂) est fourni à raison de ***5,76 kg*/*h***.

Ce fluide siloxane F₃ dénommé également silox neutre comprend ***0,0007 kg*/*h d'HCl*** résiduel (de type HCl), ***33 %*** en poids de polydiméthylsiloxane cyclique et ***67 %*** en poids de polydiméthylsiloxane linéaire essentiellement α,ω-dihydroxylé.

La viscosité de F₃ est de ***34 mPa.s*.** à 25° C.

### Etape 4 :

On fait percoler le siloxane neutre F₃ sur un support poreux constitué par de la silice précipitée ayant des pores de diamètre moyen égal à 350 µ. Le débit d'alimentation en F₃ est de ***5,76 kg*/*h***. La vitesse de migration au travers du support poreux est de 1,5 cm/min. La pression est de 0,1 MPa et la température de 20° C.

## Revendications

1. Procédé de préparation de polyorganosiloxanes par hydrolyse d'organohalosilanes de formule (**I**) RₐR¹_{b}SiX_{c}, dans laquelle
- R, R¹ sont des radicaux identiques ou différents et représentant l'hydrogène ou des alkyles linéaires ou ramifiés en C1-C6, des aryles en C₆-C₁₂, des alkylaryles ou des aralkyles,
- X représente un halogène,
- et a + b + c = 4 et 0 < c < 4 ;
**caractérisé**
• **en ce qu'**il consiste essentiellement à mettre en oeuvre :
■ au moins trois étapes d'hydrolyse successives (1), (2), (3), dans lesquelles le milieu réactionnel est apte à exercer une force hydrolysante croissante sur les organohalosilanes (I) en augmentant la réactivité de la phase aqueuse vis-à-vis des liaisons ≡SiX au fur et à mesure des étapes d'hydrolyse,
■ et, éventuellement, au moins une étape de coalescence (4),
• en ce que l'étape (1) est une hydrolyse sous pression en présence d'une solution S₁ aqueuse d'halogénure d'hydrogène saturée, à la pression et à la température du milieu réactionnel,
• en ce que l'étape (2) est une hydrolyse humide se déroulant à une température comprise entre 10 et 50°C,
• et en ce que l'étape (3) est une hydrolyse poussée, réalisée à l'aide d'un liquide constitué par de l'eau exempte ou pratiquement exempte de solutés dissous et/ou par une ou plusieurs solution(s) aqueuse(s) d'halogénure d'hydrogène.

2. Procédé selon la revendication 1, **caractérisé en ce qu'**il est mis en oeuvre en continu.

3. Procédé selon la revendication 2 **caractérisé en ce que** l'étape (1) d'hydrolyse sous pression se décompose en :
Δ au moins une hydrolyse (1₁) d'orgariohalosilanes (**I**) conduisant à un hydrolysat brut au moins triphasique comprenant :
- 1 - une phase gazeuse formée par l'halogénure d'hydrogène gazeux sous pression,
- 2 - un fluide siloxane F₁ constitué essentiellement d'oligomères linéaires α,ω-dihalogénés et éventuellement, dans une moindre mesure, d'oligomères cycliques,
- 3 - et une phase aqueuse comportant la solution S₁ saturée d'halogénure d'hydrogène ;
Δ au moins une séparation (1₂) Gaz/Liquide visant à recueillir l'halogénure d'hydrogène gazeux sous pression, d'une part, et un mélange F₁/S₁, d'autre part ;
Δ au moins une séparation (1₃) Liquide / Liquide permettant de récupérer F₁ et S₁, cette dernière étant recyclée en (1₁) ;
Δ éventuellement au moins une purification (1₄) du gaz recueilli en (1₂);
Δ et éventuellement au moins un dégazage (1₅) supplémentaire du fluide F₁ recueilli en (1₃).

4. Procédé selon la revendication 3, **caractérisé en ce que** l'étape (1₁) d'hydrolyse s'effectue sous agitation dans au moins une enceinte close, à une température comprise entre 10 et 70° C, et sous une pression régulée en halogénure d'hydrogène gazeux, supérieure ou égale à 0,10 Mpa ; le rapport massique de phase à l'alimentation RM₁ *= phase aqueuse* / *organohalosilane (****I****)* étant supérieur ou égal à 2.

5. Procédé selon la revendication 3 ou 4, **caractérisé en ce que** la durée de la réaction d'hydrolyse de l'étape (1₁) est comprise entre 30 s et 5 min.

6. Procédé selon l'une quelconque des revendications 1 à 5 **caractérisé en ce que** l'étape (2) comprend au moins une hydrolyse humide (2₁) se déroulant, sous agitation, à une température comprise entre 10 et 50° C et dans laquelle le fluide siloxane F₁ issu de l'étape (1) est mis à réagir avec une solution aqueuse concentrée S₂₁, dont le soluté est l'halogénure d'hydrogène :
- la concentration de ce soluté dans S₂₁ correspondant à une fraction de la concentration de saturation de référence (Csr), du même soluté dans une solution aqueuse, et ce dans les mêmes conditions de température et de pression, cette fraction représentant 45 à 75 % de Csr,
- le rapport massique de phase à l'alimentation RM₂ = *phase aqueuse* / *Fluide F*_{*1*} étant régulé à une valeur supérieure ou égale à 1,5 de manière à permettre l'hydrolyse des liaisons ≡SiX du fluide siloxane F₁, à hauteur d'au moins 95 %, et à obtenir ainsi un fluide siloxane F₂ constitué essentiellement d'oligomères linéaires α,ω-dihydroxylés ou α,ω-dihalogénés et, éventuellement, dans une moindre mesure d'oligomères cycliques.

7. Procédé selon la revendication 6, **caractérisé en ce que** la durée de la réaction d'hydrolyse humide (2₁) est comprise entre 4 et 20 min.

8. Procédé selon la revendication 6 ou 7, **caractérisé en ce que** l'étape (2) comporte, en outre au moins une opération de séparation (2₂) du fluide siloxane F₂ issu de (2₁) et de la solution aqueuse concentrée S₂₂, cette dernière étant au moins en partie recyclée dans l'hydrolyse sous pression (1₁) de l'étape (1) et/ou dans l'hydrolyse humide (2₁) de l'étape (2), à titre d'appoint en eau d'hydrolyse.

9. Procédé selon l'une quelconque des revendications 1 à 8 ou la revendication 6, **caractérisé en ce que** l'étape (3) comprend au moins un traitement (3₁) d'hydrolyse poussée du fluide siloxanique F₂ obtenu en (2), les quantités de F₂ d'eau et/ou de S₃ et éventuellement de S₄ mises en oeuvre en (3₁) étant ajustées de telle sorte que le rapport massique de phase à l'alimentation RM₃ = *phase aqueuse* / *Fluide F*₂ *(silox acide)* soit supérieur ou égal à 1,5, ledit traitement (3₁) permettant ainsi de finir l'hydrolyse des liaisons ≡Si-X résiduelles dans F₂, qui se trouve alors transformé en fluide siloxane F₃, constitué essentiellement d'oligomères linéaires α,ω-dihydroxylés et dans une moindre mesure, d'oligomères cycliques.

10. Procédé selon la revendication 9, **caractérisé en ce que** l'étape (3₁) se déroule à une température se situant dans l'intervalle allant de 60°C à 90°C.

11. Procédé selon la revendication 9, **caractérisé en ce que** l'étape (3) comporte, en sus, au moins une opération de séparation (3₂) du fluide siloxane F₃ issu de (3₁), et de la phase aqueuse, cette dernière, une fois récupérée, étant au moins en partie recyclée au moins dans l'étape (3₁) et éventuellement dans l'étape (2₁).

12. Procédé selon l'une quelconque des revendications 1 à 11, **caractérisé en ce qu'**il comprend une étape (4) de coalescence de F₃ issu de (3₂) consistant essentiellement à faire passer F₃ au travers d'un matériau poreux, de façon à extraire les gouttelettes de phase aqueuse acide contenues dans F₃ et à obtenir
- d'une part un fluide siloxane F₄ constitué essentiellement d'oligomères linéaires α,ω-dihydroxylés, ayant une teneur en halogène résiduel inférieure ou égale à 10 ppm et dans une moindre mesure, d'oligomères cycliques,
- et d'autre part une phase aqueuse S₄ éventuellement recyclable en amont de préférence en (3₁).

13. Procédé selon la revendication 12, **caractérisé en ce que** le matériau poreux est sélectionné dans le groupe suivant :
- silices de précipitation, supports fibreux tissés ou non,
- des zéolithes,
- et leurs mélanges.

14. Procédé selon l'une quelconque des revendications 9 à 13, **caractérisé en ce que** les fluides siloxanes F₃ et F₄ présentent une viscosité à 25° C inférieure ou égale à 50 mPa.s.

15. Procédé selon l'une quelconque des revendications 1 à 14 **caractérisé en ce que** l'halogène X = Cl.

16. Procédé selon la revendication 15, **caractérisé en ce que** l'organohalosilane de départ est Me₂SiCl₂, Me HSiCl₂ ou Me₃SiCl.

## Claims

1. Process for the preparation of polyorganosiloxanes by hydrolysis of organohalosilanes of formula (I) RₐR¹_{b}SiX_{c}, in which:
- R and R¹ are identical or different radicals and represent hydrogen or linear or branched C₁-C₆ alkyls, C₆-C₁₂ aryls, alkylaryls or aralkyls,
- X represents a halogen,
- and a+b+c = 4 and 0 < c < 4;
**characterized**
• **in that** it consists essentially in using:
□ at least three successive hydrolysis steps (1), (2), (3), in which the reaction medium is capable of exerting an increasing hydrolysing force on the organohalosilanes (I) by increasing the reactivity of the aqueous phase towards the =SIX bonds with the passage of the hydrolysis steps,
□ and, optionally, at least one coalescence step (4),
• in that step (1) is a hydrolysis under pressure in the presence of an aqueous solution S₁ of saturated hydrogen halide, at the pressure and temperature of the reaction medium,
• in that step (2) is a wet hydrolysis which takes place at a temperature of between 10 and 50°C,
• and in that step (3) is a thorough hydrolysis carried out with a liquid composed of water free or virtually free of dissolved solutes and/or composed of one or more aqueous hydrogen halide solution(s).

2. Process according to Claim 1, **characterized in that** it is carried out continuously.

3. Process according to Claim 2, **characterized in that** step (1) of hydrolysis under pressure consists of:
Δ at least one hydrolysis (1₁) of organohalosilanes (I) leading to an at least three-phase crude hydrolysate comprising:
- 1 - a gas phase formed of hydrogen halide gas under pressure,
- 2 - a siloxane fluid F₁ consisting essentially of linear α,ω-dihalo oligomers and, optionally, to a lesser extent, of cyclic oligomers,
- 3 - and an aqueous phase containing the solution S₁ saturated with hydrogen halide;
Δ at least one gas/liquid separation (1₂) intended to collect the hydrogen halide gas under pressure, on the one hand, and an F₁/S₁ mixture, on the other hand;
Δ at least one liquid/liquid separation (1₃) allowing recovery of F₁ and S₁, the latter being recycled into (1₁) ;
Δ optionally at least one purification (1₄) of the gas collected in (1₂);
Δ and optionally at least one additional degassing (1₅) of the fluid F₁ collected in (1₃).

4. Process according to Claim 3, **characterized in that** hydrolysis step (1₁) is carried out with stirring in at least one closed chamber, at a temperature of between 10 and 70°C, and at a controlled pressure of hydrogen halide gas, greater than or equal to 0.10 MPa; the mass ratio of phase to supply MR₁ = aqueous phase/organohalosilane (I) being greater than or equal to 2.

5. Process according to Claim 3 or 4, **characterized in that** the duration of the hydrolysis reaction of step (1₁) is between 30 s and 5 min.

6. Process according to any one of Claims 1 to 5, **characterized in that** step (2) comprises at least one wet hydrolysis (2₁) which takes place, with stirring, at a temperature of between 10 and 50°C and in which the siloxane fluid F₁ obtained after step (1) is reacted with a concentrated aqueous solution S₂₁, the solute of which is the hydrogen halide:
- the concentration of this solute in S₂₁ corresponds to a fraction of the reference saturation concentration (Csr), of the same solute in an aqueous solution, and under the same temperature and pressure conditions, this fraction representing 45 to 75% of Csr,
- the mass ratio of phase to supply MR₂ = aqueous phase/fluid F₁ is adjusted to a value greater than or equal to 1.5 so as to allow the hydrolysis of the ≡SiX bonds of the siloxane fluid F₁, to a level of at least 95%, and thereby to obtain a siloxane fluid F₂ consisting essentially of linear α,ω-dihydroxylated or α,ω-dihalo oligomers and, optionally, to a lesser extent, of cyclic oligomers.

7. Process according to Claim 6, **characterized in that** the duration of the wet hydrolysis reaction (2₁) is between 4 and 20 min.

8. Process according to Claim 6 or 7, **characterized in that** step (2) also includes at least one separation operation (2₂) of the siloxane fluid F₂ obtained from (2₁) and of the concentrated aqueous solution S₂₂, the latter being at least partly recycled into the hydrolysis under pressure (1₁) of step (1) and/or into the wet hydrolysis (2₁) of step (2), as a supply of hydrolysis water.

9. Process according to any one of Claims 1 to 8 or Claim 6, **characterized in that** step (3) comprises at least one treatment (3₁) of thorough hydrolysis of the siloxane fluid F₂ obtained in (2), the amounts of F₂, of water and/or of S₃ and optionally of S₄ used in (3₁) being adjusted such that the mass ratio of phase to supply MR₃ = aqueous phase/fluid F₂ (acidic silox) is greater than or equal to 1.5, the said treatment (3₁) thus making it possible to complete the hydrolysis of the residual ≡Si-X bonds in F₂, which is then converted into siloxane fluid F₃, consisting essentially of linear α,ω-dihydroxylated oligomers and, to a lesser extent, of cyclic oligomers.

10. Process according to Claim 9, **characterized in that** step (3₁) takes place at a temperature within the range from 60°C to 90°C.

11. Process according to Claim 9, **characterized in that**, in addition, step (3) includes at least one separation operation (3₂) of the siloxane fluid F₃ obtained from (3₁) and of the aqueous phase, the latter, once recovered, being at least partly recycled at least into step (3₁) and optionally into step (2₁).

12. Process according to any one of Claims 1 to 11, **characterized in that** it comprises a step (4) of coalescence of F₃ obtained from (3₂) which consists essentially in passing F₃ through a porous material so as to extract the droplets of acidic aqueous phase contained in F₃ and to obtain
- on the one hand, a siloxane fluid F₄ consisting essentially of linear α,ω-dihydroxylated oligomers having a residual halogen content of less than or equal to 10 ppm, and, to a lesser extent, of cyclic oligomers,
- and, on the other hand, an aqueous phase S₄ which is optionally recyclable upstream, preferably in (3₁).

13. Process according to Claim 12, **characterized in that** the porous material is selected from the following group:
- precipitation silicas or woven or nonwoven fibrous supports,
- zeolites,
- and mixtures thereof.

14. Process according to any one.of Claims 9 to 13, **characterized in that** the siloxane fluids F₃ and F₄ have a viscosity at 25°C of less than or equal to 50 mPa.s.

15. Process according to any one of Claims 1 to 14, **characterized in that** the halogen X = Cl.

16. Process according to Claim 15, **characterized in that** the starting organohalosilane is Me₂SiCl₂, MeHSiCl₂ or Me₃SiCl.

## Patentansprüche

1. Verfahren zur Herstellung von Polyorganosiloxanen durch Hydrolyse von Organohalosilanen der Formel (I) RₐR¹_{b}SiX_{c}, worin
- R, R¹ identische oder verschiedene Reste sind und Wasserstoff oder lineare oder verzweigte C1-C6-Alkylreste, C₆-C₁₂-Arylreste, Alkylarylreste oder Aralkylreste bedeuten,
- X ein Halogen bedeutet,
- und a + b + c = 4 und 0 < c < 4,
**dadurch gekennzeichnet,**
• **dass** es im Wesentlichen darin besteht durchzuführen:
■ zumindest drei aufeinanderfolgende Hydrolysestufen (1), (2), (3), worin das Reaktionsmilieu geeignet ist, eine zunehmende hydrolysierende Wirkung auf die Organohalosilane (I) auszuüben, wobei sich die Reaktivität der wässrigen Phase im Hinblick auf die Bindungen ≡SiX nach den jeweiligen Hydrolysestufen erhöht,
■ und gegebenenfalls zumindest eine Stufe der Koaleszenz (4),
• dass die Stufe (1) eine Hydrolyse unter Druck in Gegenwart einer gesättigten wässrigen Halogenwasserstofflösung S₁ bei dem Druck und der Temperatur des Reaktionsmilieus ist,
• dass die Stufe (2) eine feuchte Hydrolyse ist, die bei einer Temperatur zwischen 10 und 50 °C abläuft,
• und dass die Stufe (3) eine forcierte Hydrolyse ist, die durchgeführt wird mit Hilfe einer Flüssigkeit, bestehend aus Wasser, das von gelösten Bestandteilen frei oder praktisch frei ist und/oder aus einer oder mehreren wässrigen Halogenwasserstofflösungen.

2. Verfahren gemäß Anspruch 1, **dadurch gekennzeichnet, dass** es kontinuierlich durchgeführt wird.

3. Verfahren gemäß Anspruch 2, **dadurch gekennzeichnet, dass** die Hydrolysestufe (1) unter Druck sich zusammensetzt aus:
Δ zumindest einer Hydrolyse (1₁) der Organohalosilane (I), die zu einem rohen zumindest dreiphasigen Hydrolysat führt, umfassend:
- 1 - eine gasförmige Phase, gebildet von gasförmigem Halogenwasserstoff, unter Druck,
- 2 - ein Siloxanfluid F₁, im Wesentlichen bestehend aus α,ω-dihalogenierten linearen Oligomeren und gegebenenfalls in geringerem Ausmaß aus cyclischen Oligomeren,
- 3 - und eine wässrige Phase, die die gesättigte Halogenwasserstofflösung S₁ umfasst,
Δ zumindest einer Trennung (1₂) gasförmig/flüssig, die das Gewinnen von gasförmigem Halogenwasserstoff unter Druck einerseits und eines Gemisches F₁/S₁ andererseits zum Ziel hat,
Δ zumindest einer Trennung (1₃) flüssig/flüssig, die die Gewinnung von F₁ und S₁ ermöglicht, wobei letztere zu (1₁) recyclisiert wird,
Δ gegebenenfalls wenigstens einer Reinigung (1₄) des unter (1₂) gesammelten Gases,
Δ und gegebenenfalls zumindest einer weiteren Entgasung (1₅) des bei (1₃) gesammelten Fluids F₁.

4. Verfahren gemäß Anspruch 3, **dadurch gekennzeichnet, dass** die Hydrolysestufe (1₁) unter Rühren in wenigstens einem geschlossenen Behälter bei einer Temperatur zwischen 10 und 70 °C und unter einem hinsichtlich gasförmigem Halogenwasserstoff geregelten Druck von höher als oder gleich 0,10 Mpa durchgeführt wird, wobei das Masseverhältnis der Zuführungsphase RM₁ = wässrige Phase/Organohalosilan (I) größer als oder gleich 2 ist.

5. Verfahren gemäß Anspruch 3 oder 4, **dadurch gekennzeichnet, dass** die Reaktionsdauer der Hydrolyse der Stufe (1₁) zwischen 30 Sekunden und 5 Minuten liegt.

6. Verfahren gemäß einem der Ansprüche 1 bis 5, **dadurch gekennzeichnet, dass** die Stufe (2) zumindest eine feuchte Hydrolyse (2₁) umfasst, die unter Rühren bei einer Temperatur zwischen 10 und 50 °C abläuft, und worin das Siloxanfluid F₁, das der Stufe (1) entstammt, mit einer konzentrierten wässrigen Lösung S₂₁, deren Gelöstes Halogenwasserstoff ist, zur Reaktion gebracht wird:
- wobei die Konzentration dieses Gelösten in S₂₁ einer Fraktion mit der Referenzsättigungskonzentration (Csr) des gleichen Gelösten in einer wässrigen Lösung entspricht, und dies unter den gleichen Temperatur- und Druckbedingungen, wobei diese Fraktion 45 bis 75 % der Csr ausmacht,
- wobei das Massenverhältnis der Zuführungsphase RM₂ = wässrige Phase/Fluid F₁ auf einen Wert von höher als oder gleich 1,5 derart eingestellt wird, dass man die Hydrolyse der Bindungen ≡SiX des Siloxanfluids F₁ in einer Höhe von zumindest 95 % erhält, und so ein Siloxanfluid F₂ erhält, das im Wesentlichen aus α,ω-dihydroxylierten oder α,ω-dihalogenierten linearen Oligomeren und gegebenenfalls in einem geringeren Ausmaß aus cyclischen Oligomeren besteht.

7. Verfahren gemäß Anspruch 6, **dadurch gekennzeichnet, dass** die Dauer der feuchten Hydrolysereaktion (2₁) zwischen 4 und 20 Minuten liegt.

8. Verfahren gemäß Anspruch 6 oder 7, **dadurch gekennzeichnet, dass** die Stufe (2) außerdem zumindest eine Maßnahme der Trennung (2₂) des aus (2₁) hervorgegangenen Siloxanfluids F₂ und der konzentrierten wässrigen Lösung S₂₂ beinhaltet, wobei diese letztere wenigstens teilweise zur Hydrolyse unter Druck (1₁) der Stufe (1) und/oder zur feuchten Hydrolyse (2₁) der Stufe (2) als Hydrolysewasserzusatz recyclisiert wird.

9. Verfahren gemäß einem der Ansprüche 1 bis 8 oder Anspruch 6, **dadurch gekennzeichnet, dass** die Stufe (3) zumindest eine Behandlung (3₁) der forcierten Hydrolyse des bei (2) erhaltenen Siloxanfluids F₂ umfasst, wobei die Mengen von F₂ an Wasser und/oder S₃ und gegebenenfalls S₄, die in (3₁) eingesetzt werden, derart eingestellt werden, dass das Massenverhältnis der Zuführungsphase RM₃ = wässrige Phase/Fluid F₂ (Silox-Säure) größer als oder gleich 1,5 ist, wobei die Behandlung (3₁) so die Beendigung der Hydrolyse der in F₂ verbliebenen Bindungen ≡SiX erlaubt, die sich dann in transformierter Form in dem Siloxanfluid F₃ befinden, welches im Wesentlichen aus α,ω-dihydroxylierten linearen Oligomeren und in einem geringeren Ausmaß aus cyclischen Oligomeren besteht.

10. Verfahren gemäß Anspruch 9, **dadurch gekennzeichnet, dass** die Stufe (3₁) bei einer Temperatur in einem Bereich von 60 °C bis 90 °C abläuft.

11. Verfahren gemäß Anspruch 9, **dadurch gekennzeichnet, dass** die Stufe (3) zusätzlich wenigstens eine Maßnahme der Trennung (3₂) des aus (3₁) hervorgegangenen Siloxanfluids F₃ und der wässrigen Phase beinhaltet, wobei diese letztgenannte nach ihrer Gewinnung zumindest teilweise wenigstens zur Stufe (3₁) und gegebenenfalls zur Stufe (2₁) recyclisiert wird.

12. Verfahren gemäß einem der Ansprüche 1 bis 11, **dadurch gekennzeichnet, dass** es eine Stufe (4) der Koaleszenz von aus (3₂) hervorgegangenem F₃ umfasst, die im Wesentlichen darin besteht, F₃ über ein poröses Material derart passieren zu lassen, dass die in F₃ enthaltenen Tröpfchen der sauren wässrigen Phase extrahiert werden und dass man erhält:
- einesteils ein Siloxanfluid F₄, im Wesentlichen bestehend aus α,ω-dihydroxylierten linearen Oligomeren mit einem Gehalt an verbliebenem Halogen von geringer als oder gleich 10 ppm und zu einem geringeren Ausmaß aus cyclischen Oligomeren,
- und andernteils eine wässrige Phase S₄, die gegebenenfalls stromaufwärts vorzugsweise zu (3₁) recyclisierbar ist.

13. Verfahren gemäß Anspruch 12, **dadurch gekennzeichnet, dass** das poröse Material unter der folgenden Gruppe ausgewählt wird:
- Fällungssiliziumdioxiden, gewebten oder nicht gewebten faserförmigen Trägern,
- Zeolithen,
- und deren Gemischen.

14. Verfahren gemäß einem der Ansprüche 9 bis 13, **dadurch gekennzeichnet, dass** die Siloxanfluide F₃ und F₄ eine Viskosität bei 25 °C von geringer als oder gleich 50 mPa.s aufweisen.

15. Verfahren gemäß einem der Ansprüche 1 bis 14, **dadurch gekennzeichnet, dass** das Halogen X = Cl.

16. Verfahren gemäß Anspruch 15, **dadurch gekennzeichnet, dass** das Ausgangs-Organohalosilan Me₂SiCl₂, MeHSiCl₂ oder Me₃SiCl ist.
